# EUROPÄISCHE PATENTSCHRIFT

(11) **EP 2 681 018 B1**
(45) Veröffentlichungstag und Bekanntmachung des Hinweises auf die Patenterteilung: **08.05.2019**
(21) Anmeldenummer: 12723092.8
(22) Anmeldetag: 02.03.2012
(51) Int. Cl.: B27B 17/00, B27B 17/02, B23D 57/02

(54) **WERKZEUGMASCHINENSYSTEM**
MACHINE TOOL SYSTEM
SYSTÈME DE MACHINE-OUTIL

(30) Priorität: 03.03.2011 DE 102011005039
(43) Veröffentlichungstag der Anmeldung: 08.01.2014
(73) Patentinhaber: Robert Bosch GmbH, 70469 Stuttgart (DE)
(72) Erfinder: FUCHS, Rudolf, 73765 Neuhausen (DE)
(86) Internationale Anmeldenummer: PCT/EP2012/000918
(87) Internationale Veröffentlichungsnummer: WO 2012/116829

(56) Entgegenhaltungen:
- EP-A1- 1 607 198
- EP-A2- 1 083 031
- DE-A1- 4 124 234
- DE-A1- 19 531 450
- DE-A1-102006 062 001
- US-A- 4 382 334
- US-A- 4 649 644

## Beschreibung

### Stand der Technik

Es sind bereits Werkzeugmaschinensysteme bekannt, die eine Werkzeugmaschinentrennvorrichtung und die eine tragbare Werkzeugmaschine, die ein Werkzeugmaschinengehäuse und eine Kopplungsvorrichtung zur Kopplung der Werkzeugmaschinentrennvorrichtung aufweist, umfassen. Hierbei weist die Werkzeugmaschinentrennvorrichtung einen Schneidstrang und eine Führungseinheit zur Führung des Schneidstrangs auf, die zusammen ein geschlossenes System bilden. US4382334 offenbart ein Werkzeugmaschinensystem nach dem Oberbegriff des Anspruchs 1.

### Offenbarung der Erfindung

Die Erfindung ist ein Werkzeugmaschinensystem mit der Kombination von Merkmalen des Anspruchs 1 und geht aus von einem Werkzeugmaschinensystem mit zumindest einer Werkzeugmaschinentrennvorrichtung, die zumindest einen Schneidstrang und zumindest eine Führungseinheit zur Führung des Schneidstrangs aufweist, die zusammen ein geschlossenes System bilden, und mit zumindest einer tragbaren Werkzeugmaschine, die ein Werkzeugmaschinengehäuse und zumindest eine Kopplungsvorrichtung zur Kopplung der Werkzeugmaschinentrennvorrichtung, aufweist.

Die tragbare Werkzeugmaschine umfasst zumindest eine Auflageeinheit zur Auflage auf ein Werkstück, wobei die Auflageeinheit und das Werkzeugmaschinengehäuse relativ zueinander beweglich gelagert sind. Vorzugsweise verläuft eine Schwenkachse, um die die Auflageeinheit relativ zum Werkzeugmaschinengehäuse gelagert ist, zumindest im Wesentlichen senkrecht zu einer Antriebseinheitslängsachse. Es ist jedoch auch denkbar, dass die Auflageeinheit um eine andere, einem Fachmann als sinnvoll erscheinende Schwenkachse relativ zum Werkzeugmaschinengehäuse schwenkbar gelagert ist. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Besonders bevorzugt ist die tragbare Werkzeugmaschine als elektrisch betreibbare Tauchsäge ausgebildet. Vorzugsweise wird die tragbare Werkzeugmaschine mittels eines Akkumulator-Packs mit Energie zu einem Betrieb einer Antriebseinheit der tragbaren Werkzeugmaschine versorgt. Es ist jedoch auch denkbar, dass die tragbare Werkzeugmaschine mittels eines Kabels, das an ein örtliches Energienetz anschließbar ist, mit Energie versorgt wird.

Unter einer "Kopplungsvorrichtung" soll hier insbesondere eine Vorrichtung verstanden werden, die dazu vorgesehen ist, die Werkzeugmaschinentrennvorrichtung mittels einer formschlüssigen und/oder kraftschlüssigen Verbindung zur Bearbeitung eines Werkstücks mit der tragbaren Werkzeugmaschine wirkungsmäßig zu verbinden. Insbesondere können in einem mit der Werkzeugmaschinentrennvorrichtung gekoppelten Zustand der Kopplungsvorrichtung in einem Betriebszustand der tragbaren Werkzeugmaschine Kräfte und/oder Drehmomente von einer Antriebseinheit der tragbaren Werkzeugmaschine zum Antrieb des Schneidstrangs an die Werkzeugmaschinentrennvorrichtung übertragen werden. Somit ist die Kopplungsvorrichtung vorzugsweise als Werkzeugaufnahme ausgebildet. Der Ausdruck "dazu vorgesehen" soll hier insbesondere speziell ausgelegt und/oder speziell ausgestattet definieren. Der Begriff "Antriebseinheit" soll hier insbesondere eine Einheit definieren, die dazu vorgesehen ist, Kräfte und/oder Drehmomente zu einem Antrieb des Schneidstrangs zu erzeugen. Bevorzugt wird zur Erzeugung von Kräften und/oder Drehmomenten mittels der Antriebseinheit thermische Energie, chemische Energie und/oder elektrische Energie in Bewegungsenergie umgewandelt. Insbesondere ist die Antriebseinheit direkt und/oder indirekt mit dem Schneidstrang koppelbar ausgebildet. Besonders bevorzugt umfasst die Antriebseinheit zumindest einen Rotor, der zumindest eine Ankerwelle aufweist, und zumindest einen Stator. Vorzugsweise ist die Antriebseinheit als Elektromotoreinheit ausgebildet. Es ist jedoch auch denkbar, dass die Antriebseinheit eine andere, einem Fachmann als sinnvoll erscheinende Ausgestaltung aufweist.

Unter einem "Schneidstrang" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Besonders bevorzugt wird der Schneidstrang in zumindest einem Betriebszustand umlaufend bewegt, insbesondere entlang eines Umfangs der Führungseinheit. Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. Bevorzugt weist die Führungseinheit zumindest ein Führungselement auf, insbesondere eine Führungsnut, durch das der Schneidstrang geführt wird. Bevorzugt ist der Schneidstrang, in einer Schneidebene betrachtet, entlang eines gesamten Umfangs der Führungseinheit durch die Führungseinheit mittels des Führungselements, insbesondere der Führungsnut, geführt. Vorzugsweise ist die Führungseinheit als Schwert ausgebildet. Der Begriff "Schwert" soll hier insbesondere eine geometrische Form definieren, die, in der Schneidebene betrachtet, eine in sich geschlossene Außenkontur aufweist, die zumindest zwei zueinander parallel verlaufende Geraden und zumindest zwei jeweils sich zugewandte Enden der Geraden miteinander verbindende Verbindungsabschnitte, insbesondere Kreisbögen, umfasst. Somit weist die Führungseinheit eine geometrische Form auf, die sich, in der Schneidebene betrachtet, aus einem Rechteck und zumindest zwei an sich gegenüberliegenden Seiten des Rechtecks angeordneten Kreissektoren zusammensetzt.

Der Begriff "Schneidebene" soll hier insbesondere eine Ebene definieren, in der der Schneidstrang in zumindest einem Betriebszustand entlang eines Umfangs der Führungseinheit in zumindest zwei zueinander entgegengesetzt gerichtete Schneidrichtungen relativ zur Führungseinheit bewegt wird. Bevorzugt ist die Schneidebene bei einer Bearbeitung eines Werkstücks zumindest im Wesentlichen quer zu einer bearbeitenden Werkstückoberfläche ausgerichtet. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer bearbeitenden Werkstückoberfläche ausgerichtet ist, insbesondere bei einer Ausbildung des Schneidstrangs als Schleifmittel usw. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Schneidrichtung" soll hier insbesondere eine Richtung verstanden werden, entlang der der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Bevorzugt wird der Schneidstrang in einem Betriebszustand entlang der Schneidrichtung relativ zur Führungseinheit bewegt.

Der Schneidstrang und die Führungseinheit bilden vorzugsweise zusammen ein geschlossenes System. Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, wie beispielsweise einer Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmittel usw., voneinander trennbar sind. Unter einer "Auflageeinheit" soll hier insbesondere eine Einheit verstanden werden, die während einer Bearbeitung eines Werkstücks mittels der tragbaren Werkzeugmaschine bei einer ordnungsgemäßen Handhabung der tragbaren Werkzeugmaschine, auf dem Werkstück aufliegt, insbesondere mit der Auflagefläche der Auflageeinheit, und die dazu vorgesehen ist, die tragbare Werkzeugmaschine während einer Bearbeitung des Werkstücks auf dem Werkstück abzustützen. Besonders bevorzugt ist die Auflageeinheit als Gleitschuh und/oder als Grundplatte ausgebildet. Vorzugsweise gleitet die tragbare Werkzeugmaschine während einer Bearbeitung des Werkstücks mittels der Auflageeinheit, insbesondere mit der Auflagefläche der Auflageeinheit, auf einer Oberfläche des zu bearbeitenden Werkstücks. Der Ausdruck "beweglich gelagert" soll hier insbesondere eine Lagerung der Auflageeinheit an der tragbaren Werkzeugmaschine definieren, wobei die Auflageeinheit, insbesondere entkoppelt von einer elastischen Verformung der Auflageeinheit, eine Bewegungsmöglichkeit entlang zumindest einer Strecke größer als 1 mm, bevorzugt größer als 10 mm und besonders bevorzugt größer als 50 mm aufweist und/oder eine Bewegungsmöglichkeit um zumindest eine Achse um einen Winkel größer als 10°, bevorzugt größer als 45° und besonders bevorzugt größer als 60° aufweist. Mittels der erfindungsgemäßen Ausgestaltung der tragbaren Werkzeugmaschine kann vorteilhaft beispielsweise ein Einstechschnitt mit einer mit der Kopplungsvorrichtung gekoppelten Werkzeugmaschinentrennvorrichtung in ein zu bearbeitendes Werkstück eingebracht werden.

Des Weiteren wird vorgeschlagen, dass die Auflageeinheit zumindest ein Lagerelement zur schwenkbaren Lagerung umfasst, das in einem montierten Zustand der Auflageeinheit an einer der Kopplungsvorrichtung abgewandten Seite des Werkzeugmaschinengehäuses mit dem Werkzeugmaschinengehäuse wirkungsmäßig verbunden ist. Besonders bevorzugt ist die Auflageeinheit gelenkig mittels des Lagerelements mit dem Werkzeugmaschinengehäuse verbunden. Besonders bevorzugt ist das Lagerelement als Lasche mit einer Ausnehmung ausgebildet, die in einem montierten Zustand zur gelenkigen Verbindung der Auflageeinheit mit dem Werkzeugmaschinengehäuse mit einem bolzenförmigen Verbindungselement des Werkzeugmaschinengehäuses wirkungsmäßig zusammenwirkt. Vorzugsweise greift das bolzenförmige Verbindungselement in einem montierten Zustand in die Ausnehmung der Lasche ein und verbindet somit die Auflageeinheit gelenkig mit dem Werkzeugmaschinengehäuse. Besonders bevorzugt weist die Auflageeinheit zumindest zwei als Laschen mit Ausnehmungen ausgebildete Lagerelemente auf, die wirkungsmäßig mit einem bolzenförmigen Verbindungselement des Werkzeugmaschinengehäuses verbunden sind. Es ist jedoch auch denkbar, dass das Lagerelement eine andere, einem Fachmann als sinnvoll erscheinende Ausgestaltung und/oder Anordnung aufweist. Es kann konstruktiv einfach eine bewegliche Lagerung der Auflageeinheit relativ zum Werkzeugmaschinengehäuse erreicht werden.

Vorteilhafterweise weist die Auflageeinheit zumindest ein Federelement auf, das dazu vorgesehen ist, die Auflageeinheit und das Werkzeugmaschinengehäuse relativ zueinander vorzuspannen. Unter einem "Federelement" soll insbesondere ein makroskopisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Besonders bevorzugt ist das Federelement als Schenkelfeder ausgebildet. Vorzugsweise stützt sich die Schenkelfeder mit einem Ende an dem Werkzeugmaschinengehäuse ab und mit einem weiteren Ende der Schenkelfeder stützt sich die Schenkelfeder zur Vorspannung der Auflageeinheit relativ zum Werkzeugmaschinengehäuse an der Auflageeinheit ab. Es ist jedoch auch denkbar, dass das Federelement eine andere, einem Fachmann als sinnvoll erscheinende Ausgestaltung und/oder Anordnung aufweist. Mittels einer Federkraft des Federelements kann vorteilhaft eine Vorspannung der Auflageeinheit relativ zum Werkzeugmaschinengehäuse erreicht werden. Ferner kann vorteilhaft zuverlässig bei einer Aufhebung beispielsweise einer Betätigungskraft eines Bedieners mittels der Federkraft des Federelements eine Erreichung und/oder eine Einhaltung einer vorgegebenen relativen Ausgangsposition zwischen der Auflageeinheit und dem Werkzeugmaschinengehäuse erreicht werden.

Vorzugsweise ist die Arretiervorrichtung auf einer dem Werkzeugmaschinengehäuse zugewandten Seite der Auflageeinheit angeordnet. Besonders bevorzugt weist die Auflageeinheit eine Ausnehmung auf, durch die sich die Werkzeugmaschinentrennvorrichtung in einem mit der Kopplungsvorrichtung gekoppelten Zustand zumindest in einem Betriebszustand hindurch erstreckt, um eine Bearbeitung eines zu bearbeitenden Werkstücks zu ermöglichen. Erfindungsgemäß ist die Arretiervorrichtung dazu vorgesehen, in zumindest einem Betriebszustand zur Fixierung des Werkzeugmaschinengehäuses in einer Winkelstellung relativ zur Auflageeinheit eine Klemmkraft auf die Führungseinheit der mit der Kopplungsvorrichtung gekoppelten Werkzeugmaschinentrennvorrichtung auszuüben. Ferner kann vorteilhaft eine kompakte Anordnung der Arretiereinheit an der Auflageeinheit erreicht werden.

Zudem wird vorgeschlagen, dass die Kopplungsvorrichtung zumindest relativ zum Werkzeugmaschinengehäuse schwenkbar gelagert ist. Bevorzugt ist die Kopplungsvorrichtung um eine zumindest im Wesentlichen senkrecht zur Schneidebene des Schneidstrangs verlaufende Schwenkachse relativ zum Werkzeugmaschinengehäuse schwenkbar gelagert. Es ist jedoch auch denkbar, dass die Kopplungsvorrichtung alternativ oder zusätzlich um eine andere, einem Fachmann als sinnvoll erscheinende Schwenkachse relativ zum Werkzeugmaschinengehäuse schwenkbar gelagert ist. Es kann vorteilhaft eine zumindest im Wesentlichen dauerhafte zumindest im Wesentlichen senkrechte Ausrichtung einer Längsachse der Führungseinheit relativ zu einer Auflagefläche der Auflageeinheit in einem mit der Kopplungsvorrichtung gekoppelten Zustand der Werkzeugmaschinentrennvorrichtung bei Schwenkbewegungen der Auflageeinheit relativ zum Werkzeugmaschinengehäuse gewährleistet werden. Somit kann vorteilhaft eine zuverlässige und präzise Bearbeitung eines Werkstücks in verschiedenen Winkelstellungen der Auflageeinheit relativ zum Werkzeugmaschinengehäuse erreicht werden.

Vorteilhafterweise weist die Auflageeinheit zumindest eine Werkzeugführungseinheit auf, die dazu vorgesehen ist, eine Längsachse der Werkzeugmaschinentrennvorrichtung in Abhängigkeit einer Winkelstellung des Werkzeugmaschinengehäuse relativ zur Auflageeinheit zumindest im Wesentlichen senkrecht zu einer Auflagefläche der Auflageeinheit auszurichten. Es kann vorteilhaft eine Position der mit der Kopplungsvorrichtung gekoppelten Werkzeugmaschinentrennvorrichtung an eine Winkelstellung der Auflageeinheit relativ zum Werkzeugmaschinengehäuse angepasst werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine tragbare Werkzeugmaschine mit einer Werkzeugmaschinentrennvorrichtung in einer schematischen Darstellung,
- Fig. 2: eine Detailansicht der Werkzeugmaschinentrennvorrichtung in einer schematischen Darstellung,
- Fig. 3: eine Schnittansicht entlang der Linie III-III aus Figur 2 der Werkzeugmaschinentrennvorrichtung in einer schematischen Darstellung,
- Fig. 4: eine Detailansicht von Schneidenträgerelementen eines Schneidstrangs der Werkzeugmaschinentrennvorrichtung in einer schematischen Darstellung,
- Fig. 5: eine weitere Detailansicht eines der Schneidenträgerelemente des Schneidstrangs der Werkzeugmaschinentrennvorrichtung in einer schematischen Darstellung und
- Fig. 6: eine Detailansicht einer Anordnung der Schneidenträgerelemente in einer Führungseinheit der Werkzeugmaschinentrennvorrichtung in einer schematischen Darstellung.

### Beschreibung des Ausführungsbeispiels

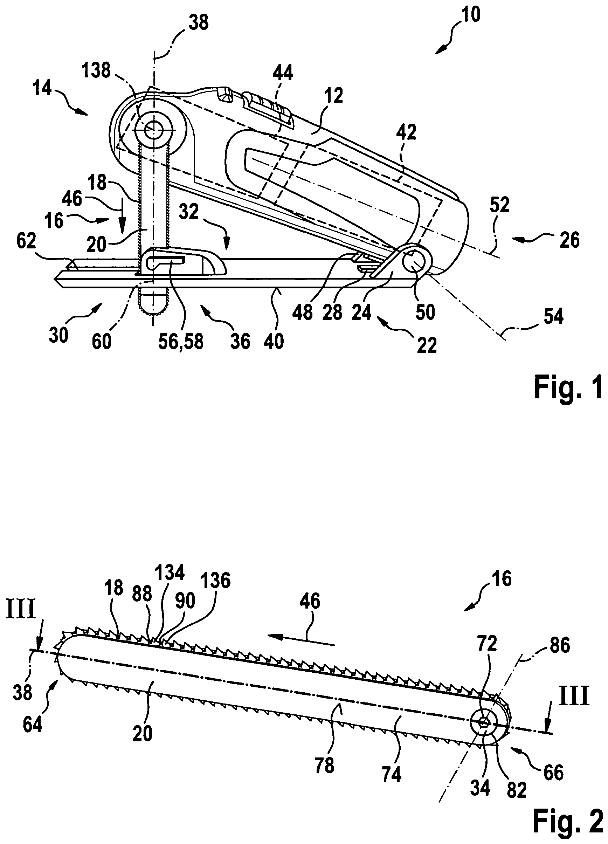

Figur 1 zeigt eine tragbare Werkzeugmaschine 10 mit einer Werkzeugmaschinentrennvorrichtung 16, die zusammen ein Werkzeugmaschinensystem bilden. Die tragbare Werkzeugmaschine 10 weist eine Kopplungsvorrichtung 14 zur formschlüssigen und/oder kraftschlüssigen Kopplung mit der Werkzeugmaschinentrennvorrichtung 16 auf. Die Kopplungsvorrichtung 14 kann hierbei als Bajonettverschluss und/oder als eine andere, einem Fachmann als sinnvoll erscheinende Kopplungsvorrichtung ausgebildet sein. Ferner weist die tragbare Werkzeugmaschine 10 ein Werkzeugmaschinengehäuse 12 auf, das eine Antriebseinheit 42 und eine Getriebeeinheit 44 der tragbaren Werkzeugmaschine 10 umschließt. Die Antriebseinheit 42 und die Getriebeeinheit 44 sind zur Erzeugung eines auf die Werkzeugmaschinentrennvorrichtung 16 übertragbaren Antriebsmoments auf eine, einem Fachmann bereits bekannte Art und Weise wirkungsmäßig miteinander verbunden. Hierbei sind die Antriebseinheit 42 und/oder die Getriebeeinheit 44 dazu vorgesehen, in einem montierten Zustand der Werkzeugmaschinentrennvorrichtung 16 mittels der Kopplungsvorrichtung 14 mit einem Schneidstrang 18 der Werkzeugmaschinentrennvorrichtung 16 gekoppelt zu werden. Die Getriebeeinheit 44 der tragbaren Werkzeugmaschine 10 ist als Winkelgetriebe ausgebildet. Die Antriebseinheit 42 ist als Elektromotoreinheit ausgebildet. Es ist jedoch auch denkbar, dass die Antriebseinheit 42 und/oder die Getriebeeinheit 44 eine andere, einem Fachmann als sinnvoll erscheinende Ausgestaltung aufweisen. Die Antriebseinheit 42 ist dazu vorgesehen, den Schneidstrang 18 der Werkzeugmaschinentrennvorrichtung 16 in zumindest einem Betriebszustand mit einer Schnittgeschwindigkeit kleiner als 6 m/s anzutreiben. Hierbei weist die tragbare Werkzeugmaschine 10 zumindest einen Betriebsmodus auf, in dem ein Antrieb des Schneidstrangs 18 in einer Führungseinheit 20 der Werkzeugmaschinentrennvorrichtung 16 entlang einer Schneidrichtung 46 des Schneidstrangs 18 mit einer Schnittgeschwindigkeit kleiner als 6 m/s ermöglicht wird.

Ferner umfasst die tragbare Werkzeugmaschine 10 eine Auflageeinheit 22 zur Auflage auf ein Werkstück (hier nicht näher dargestellt), wobei die Auflageeinheit 22 und das Werkzeugmaschinengehäuse 12 relativ zueinander beweglich gelagert sind. Die Auflageeinheit 22 liegt zumindest in einem Betriebszustand mit einer Auflagefläche 40 der Auflageeinheit 22 auf einem zu bearbeitenden Werkstück (hier nicht näher dargestellt) auf. Die Auflageeinheit 22 ist als Gleitschuh und/oder als Grundplatte ausgebildet, mittels dem und/oder der die tragbare Werkzeugmaschine 10 während einer Bearbeitung eines Werkstücks auf dem Werkstück gleitet und/oder abgestützt wird. Die Auflageeinheit 22 umfasst ein Lagerelement 24 zur schwenkbaren Lagerung der Auflageeinheit 22 am Werkzeugmaschinengehäuse 12, das in einem montierten Zustand der Auflageeinheit 22 an einer der Kopplungsvorrichtung 14 abgewandten Seite 26 des Werkzeugmaschinengehäuses 12 mit dem Werkzeugmaschinengehäuse 12 wirkungsmäßig verbunden ist. Insgesamt weist die Auflageeinheit 22 zwei Lagerelemente 24, 48 auf. Die Lagerelemente 24, 48 sind jeweils als Laschen mit einer Ausnehmung ausgebildet. Die Lagerelemente 24, 48 erstrecken sich in einem montierten Zustand der Auflageeinheit 22 in Richtung des Werkzeugmaschinengehäuses 12. Das Werkzeugmaschinengehäuse 12 weist zur schwenkbaren Lagerung der Auflageeinheit 22 an dem Werkzeugmaschinengehäuse 12 ein bolzenförmiges Verbindungselement 50 auf. Das bolzenförmige Verbindungselement 50 greift in einem montierten Zustand der Auflageeinheit 22 jeweils in eine Ausnehmung der als Laschen ausgebildeten Lagerelemente 24, 48 ein. Die Auflageeinheit 22 wird mittels eines Zusammenwirkens der Lagerelemente 24, 48 und des bolzenförmigen Verbindungselements 50 schwenkbar am Werkzeugmaschinengehäuse 12 gelagert. Somit sind das Werkzeugmaschinengehäuse 12 und die Auflageeinheit 22 relativ zueinander schwenkbar gelagert. Es ist jedoch auch denkbar, dass die Auflageeinheit 22 mittels einer anderen, einem Fachmann als sinnvoll erscheinenden Ausgestaltung der Lagerung schwenkbar am Werkzeugmaschinengehäuse 12 gelagert ist. Die Auflageeinheit 22 und das Werkzeugmaschinengehäuse 12 sind mittels eines Zusammenwirkens der Lagerelemente 24, 48 und des bolzenförmigen Verbindungselements 50 relativ zueinander schwenkbar um eine zumindest im Wesentlichen senkrecht zu einer Antriebseinheitslängsachse 52 der Antriebseinheit 42 verlaufende Schwenkachse 54 gelagert. Die Schwenkachse 54 verläuft in einem montierten Zustand der Auflageeinheit 22 koaxial zu einer Längsachse des bolzenförmigen Verbindungselements 50 des Werkzeugmaschinengehäuses 12.

Des Weiteren weist die Auflageeinheit 22 zumindest ein Federelement 28 auf, das dazu vorgesehen ist, die Auflageeinheit 22 und das Werkzeugmaschinengehäuse 12 relativ zueinander vorzuspannen. Das Federelement 28 ist als Schenkelfeder ausgebildet. Es ist jedoch auch denkbar, dass das Federelement 28 eine andere, einem Fachmann als sinnvoll erscheinende Ausgestaltung, wie beispielsweise als Druckfeder, als Zugfeder, als Tellerfeder usw., aufweist. Das als Schenkelfeder ausgebildete Federelement 28 stützt sich in einem montierten Zustand der Auflageeinheit 22 mit einem Ende an dem Werkzeugmaschinengehäuse 12 ab. Zudem stützt sich das als Schenkelfeder ausgebildete Federelement 28 mit einem weiteren Ende, das dem sich an dem Werkzeugmaschinengehäuse 12 abstützenden Ende abgewandt ist, an der Auflageeinheit 22 ab. Die Auflageeinheit 22 und das Werkzeugmaschinengehäuse 12 weisen jeweils ein Aufnahmeelement (hier nicht näher dargestellt) zu Aufnahme des jeweiligen Endes des als Schenkelfeder ausgebildeten Federelements 28 auf.

Ferner umfasst die Auflageeinheit 22 eine Arretiervorrichtung 30, die dazu vorgesehen ist, das Werkzeugmaschinengehäuse 12 in einer Winkelstellung relativ zur Auflageeinheit 22 zu fixieren. Die Arretiervorrichtung 30 weist ein Klemmelement 56 auf, das dazu vorgesehen ist, in einem montierten Zustand der Werkzeugmaschinentrennvorrichtung 16 eine Klemmkraft zur Fixierung des Werkzeugmaschinengehäuses 12 in einer Winkelstellung relativ zur Auflageeinheit 22 auf die Führungseinheit 20 auszuüben. Die Klemmkraft wirkt in einer zumindest im Wesentlichen senkrecht zu einer Schneidebene des Schneidstrangs 18 verlaufenden Richtung auf die Führungseinheit 20. Somit wird eine Bewegung der Führungseinheit 20 relativ zur Auflageeinheit 22 mittels der Arretiervorrichtung 30 verhindert. Infolge der Verbindung der Werkzeugmaschinentrennvorrichtung 16 und der Kopplungsvorrichtung 14 wird zudem mittels der Fixierung der Führungseinheit 20 durch die Arretiervorrichtung 30 eine Bewegung des Werkzeugmaschinengehäuses 12 relativ zur Auflageeinheit 22 verhindert. Die Arretiervorrichtung 30 ist auf einer dem Werkzeugmaschinengehäuse 12 zugewandten Seite 32 der Auflageeinheit 22 angeordnet, die der Auflagefläche 40 der Auflageeinheit 22 abgewandt ist.

Zudem weist die Auflageeinheit 22 eine Werkzeugführungseinheit 36 auf, die dazu vorgesehen ist, eine Längsachse 38 der Werkzeugmaschinentrennvorrichtung 16 in Abhängigkeit einer Winkelstellung des Werkzeugmaschinengehäuse 12 relativ zur Auflageeinheit 22 zumindest im Wesentlichen senkrecht zu einer Auflagefläche 40 der Auflageeinheit 22 auszurichten. Die Kopplungsvorrichtung 14 ist hierbei relativ zum Werkzeugmaschinengehäuse 12 schwenkbar gelagert. Somit kann die Werkzeugmaschinentrennvorrichtung 16 in einem mit der Kopplungsvorrichtung 14 gekoppelten Zustand relativ zum Werkzeugmaschinengehäuse 12 geschwenkt werden. Die Kopplungsvorrichtung 14 ist schwenkbar um eine in einem montierten Zustand der Werkzeugmaschinentrennvorrichtung 16 zumindest im Wesentlichen senkrecht zur Schneidebene des Schneidstrangs 18 verlaufende Schwenkachse 138 gelagert. Zudem kann die Werkzeugmaschinentrennvorrichtung 16 mittels der schwenkbaren Lagerung der Kopplungsvorrichtung 14 relativ zur Auflageeinheit 22 geschwenkt werden. Die Führungseinheit 20 der Werkzeugmaschinentrennvorrichtung 16 wird in einem in der Werkzeugführungseinheit 36 angeordneten Zustand mittels der Werkzeugführungseinheit 36 geführt. Somit wird die Führungseinheit 20 infolge der Führung in der Werkzeugführungseinheit 36 bei einer Schwenkbewegung der Auflageeinheit 22 und des Werkzeugmaschinengehäuses 12 relativ zueinander mittels der schwenkbar gelagerten Kopplungsvorrichtung 14 relativ zum Werkzeugmaschinengehäuse 22 geschwenkt. Die Längsachse 38 der Werkzeugmaschinentrennvorrichtung 16 behält hierbei während der Schwenkbewegung eine zumindest im Wesentlichen senkrechte Ausrichtung zur Auflagefläche 40 der Auflageeinheit 22 mittels der Führung in der Werkzeugführungseinheit 36 bei. Die Werkzeugführungseinheit 36 und die Arretiervorrichtung 30 sind teilweise einstückig ausgebildet. Hierbei ist das Klemmelement 56 der Arretiervorrichtung 30 einstückig mit einem Führungselement 58 der Werkzeugführungseinheit 36 ausgebildet. Es ist jedoch auch denkbar, dass die Werkzeugführungseinheit 36 und die Arretiervorrichtung 30 und/oder das Klemmelement 56 und das Führungselement 58 getrennt voneinander ausgebildet sind. Das Klemmelement 56 bzw. das Führungselement 58 ist drehbar um eine in einem montierten Zustand der Werkzeugmaschinentrennvorrichtung 16 zumindest im Wesentlichen senkrecht zur Schneidebene des Schneidstrangs 18 verlaufende Schwenkachse 60 gelagert. Das Klemmelement 56 bzw.das Führungselement 58 weist eine Lösestellung, eine Führungsstellung und eine Klemmstellung auf. In Figur 1 ist das Klemmelement 56 bzw.das Führungselement 58 in der Klemmstellung dargestellt. In der Klemmstellung wird die Führungseinheit 20 mittels einer durch das Klemmelement 56 bzw. durch das Führungselement 58 auf die Führungseinheit 20 wirkenden Klemmkraft in einer Position relativ zur Auflageeinheit 22 fixiert. Hierdurch wird das Werkzeugmaschinengehäuse 12 in einer von einem Bediener gewünschten Winkelstellung relativ zur Auflageeinheit 22 fixiert.

Bei einer Drehung des Klemmelements 56 bzw. des Führungselements 58 ausgehend von der Klemmstellung um die Schwenkachse 60 um 90° in Richtung des Werkzeugmaschinengehäuses 12 wird das Klemmelement 56 bzw. das Führungselement 58 in die Führungsstellung überführt. In der Führungsstellung wird eine Bewegungsmöglichkeit der Führungseinheit 20 der Werkzeugmaschinentrennvorrichtung 16 entlang einer zumindest im Wesentlichen senkrecht zur Auflagefläche 40 der Auflageeinheit 22 verlaufenden Richtung in der Werkzeugführungseinheit 36 bzw. der Arretiervorrichtung 30 relativ zur Auflageeinheit 22 vorgegeben. Somit werden Bewegungsmöglichkeiten der Führungseinheit 20 entlang von der zumindest im Wesentlichen senkrecht zur Auflagefläche 40 verlaufenden Richtung abweichenden Richtungen in der Führungsstellung des Klemmelements 56 bzw. des Führungselements 58 verhindert. Hierbei kann das Klemmelement 56 bzw. das Führungselement 58 rippenförmige Anformungen (hier nicht näher dargestellt) aufweisen, die in einem montierten Zustand der Werkzeugmaschinentrennvorrichtung 16 in der Führungsstellung des Klemmelements 56 bzw. des Führungselements 58 in nutförmige Ausnehmungen (hier nicht näher dargestellt) der Führungseinheit 20 eingreifen. Es ist jedoch auch denkbar, dass das Klemmelement 56 bzw. das Führungselement 58 und die Führungseinheit 20 eine andere, einem Fachmann als sinnvoll erscheinende Ausgestaltung zur Führung der Führungseinheit 20 aufweisen.

Bei einer weiteren Drehung des Klemmelements 56 bzw. des Führungselements 58 um 90° ausgehend von der Führungsstellung entlang der Richtung, in der das Klemmelement 56 bzw. das Führungselement 58 von der Klemmstellung in die Führungsstellung gedreht wurde, wird das Klemmelement 56 bzw.das Führungselement 58 in die Lösestellung überführt. Das Klemmelement 56 bzw. das Führungselement 58 wird infolge der Drehbewegung von der Führungsstellung in die Lösestellung von der Führungseinheit 20 wegbewegt. Somit sind das Klemmelement 56 bzw. das Führungselement 58 in der Lösestellung kontaktlos zur Führungseinheit 20. In der Lösestellung kann die Werkzeugmaschinentrennvorrichtung 16 aus der Werkzeugführungseinheit 36 bzw. der Arretiervorrichtung 30 entnommen werden. Hierbei weist die Auflageeinheit 22 eine Ausnehmung 62 in der Auflagefläche 40 auf. Die Ausnehmung 62 erstreckt sich, in einer zumindest im Wesentlichen parallel zur Auflagefläche 40 verlaufenden Ebene betrachtet, ausgehend von einem den Lagerelementen 24, 48 abgewandten Ende der Auflageeinheit 22 bis zur Arretiervorrichtung 30 bzw. bis zur Werkzeugführungseinheit 36. Somit kann die Werkzeugmaschinentrennvorrichtung 16 in der Lösestellung des Klemmelements 56 bzw. des Führungselements 58 mittels einer Schwenkbewegung der Kopplungsvorrichtung 14 relativ zum Werkzeugmaschinengehäuse 12 und/oder einer Schwenkbewegung des Werkzeugmaschinengehäuses 12 relativ zur Auflageeinheit 22 aus der Arretiervorrichtung 30 bzw. aus der Werkzeugführungseinheit 36 heraus geschwenkt werden. Zudem erstreckt sich die Werkzeugmaschinentrennvorrichtung 16 in einem mit der Kopplungsvorrichtung 14 gekoppelten Zustand zu einer Bearbeitung eines Werkstücks durch die Ausnehmung 62 hindurch.

Ein Bediener der tragbaren Werkzeugmaschine 10 kann bei einer Bearbeitung eines Werkstücks mittels der schwenkbaren Lagerung des Werkzeugmaschinengehäuses 12 und der Auflageeinheit 22 relativ zueinander eine Schnitttiefe eines mittels des Schneidstrangs 18 in ein Werkstück einbringbaren Schnitts einstellen. Hierbei ist die Führungseinheit 20 in der Werkzeugführungseinheit 36 bzw. in der Arretiervorrichtung 30 angeordnet und das Klemmelement 56 bzw. das Führungselement 58 befindet sich in der Führungsstellung. Somit kann die Führungseinheit 20 in der Werkzeugführungseinheit 36 bzw. in der Arretiervorrichtung 30 entlang der zumindest im Wesentlichen senkrecht zur Auflagefläche 40 verlaufenden Richtung bewegt werden, bis die gewünschte Schnitttiefe eingestellt ist. Der Bediener betätigt nach erfolgreicher Einstellung der Schnitttiefe das Klemmelement 56 bzw. das Führungselement 58 und überführt das Klemmelement 56 bzw. das Führungselement 58 in die Klemmstellung. Hierbei wird das Werkzeugmaschinengehäuse 12 in einer Winkelstellung relativ zur Auflageeinheit 22 fixiert und eine Schnitttiefe der Werkzeugmaschinentrennvorrichtung 16 wird festgelegt. Somit kann der Bediener einen Schnitt in ein zu bearbeitendes Werkstück einbringen, der ausgehend von einer Oberfläche eines zu bearbeitenden Werkstücks eine konstante Schnitttiefe aufweist.

Ferner kann ein Bediener bei einer Anordnung der Führungseinheit 20 in der Werkzeugführungseinheit 36 bzw. in der Arretiervorrichtung 30 mittels des Schneidstrangs 18 Einstechschnitte in ein zu bearbeitendes Werkstück einbringen. Hierbei ist die Führungseinheit 20 in der Werkzeugführungseinheit 36 bzw. in der Arretiervorrichtung 30 angeordnet und das Klemmelement 56 bzw. das Führungselement 58 befindet sich in der Führungsstellung. Mittels einer Schwenkbewegung des Werkzeugmaschinengehäuses 12 relativ zur Auflageeinheit 22 und einer während der Schwenkbewegung des Werkzeugmaschinengehäuses 12 konstanten zumindest im Wesentlichen senkrecht zur Auflagefläche 40 verlaufenden Ausrichtung der Längsachse 38 der Werkzeugmaschinentrennvorrichtung 16 durch die Werkzeugführungseinheit 36 können Einstechschnitte bei einer Bearbeitung eines Werkstücks mittels des Schneidstrangs 16 in ein zu bearbeitendes Werkstück eingebracht werden.

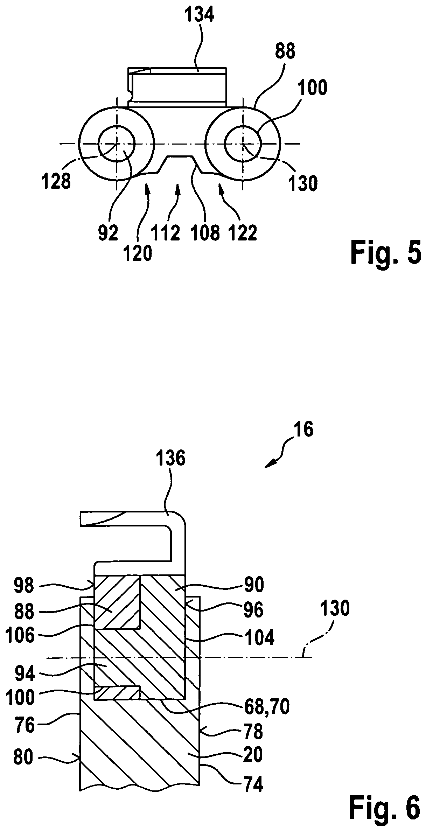

Figur 2 zeigt die Werkzeugmaschinentrennvorrichtung 16 in einem von der Kopplungsvorrichtung 14 der tragbaren Werkzeugmaschine 10 entkoppelten Zustand. Die Werkzeugmaschinentrennvorrichtung 16 weist den Schneidstrang 18 und die Führungseinheit 20 auf, die zusammen ein geschlossenes System bilden. Die Führungseinheit 20 ist als Schwert ausgebildet. Ferner weist die Führungseinheit 20, in der Schneidebene des Schneidstrangs 18 betrachtet, zumindest zwei konvex ausgebildete Enden 64, 66 auf. Die konvex ausgebildeten Enden 64, 66 der Führungseinheit 20 sind an zwei sich abgewandten Seiten der Führungseinheit 20 angeordnet. Der Schneidstrang 18 wird mittels der Führungseinheit 20 geführt. Hierzu weist die Führungseinheit 20 zumindest ein Führungselement 68 (Figur 6) auf, mittels dessen der Schneidstrang 18 geführt wird. Das Führungselement 68 ist hierbei als Führungsnut 70 ausgebildet, die sich in einer Schneidebene des Schneidstrangs 18 entlang eines gesamten Umfangs der Führungseinheit 20 erstreckt. Hierbei wird der Schneidstrang 18 mittels die Führungsnut 70 begrenzende Randbereiche der Führungseinheit 20 geführt. Es ist jedoch auch denkbar, dass das Führungselement 68 in einer anderen, einem Fachmann als sinnvoll erscheinenden Art und Weise, wie beispielsweise als rippenartige Anformung an der Führungseinheit 20, die in eine Ausnehmung an dem Schneidstrang 18 eingreift, ausgebildet ist. Der Schneidstrang 18 wird, in einer senkrecht zur Schneidebene verlaufenden Ebene betrachtet, von drei Seiten von den die Führungsnut 70 begrenzenden Randbereichen umgeben (Figur 6). Der Schneidstrang 18 wird während eines Betriebs umlaufend entlang des Umfangs in der Führungsnut 70 relativ zur Führungseinheit 20 bewegt.

Des Weiteren weist die Werkzeugmaschinentrennvorrichtung 16 ein mittels der Führungseinheit 20 zumindest teilweise gelagertes Drehmomentübertragungselement 34 zum Antrieb des Schneidstrangs 18 auf. Hierbei weist das Drehmomentübertragungselement 34 eine Kopplungsausnehmung 72 auf, die in einem montierten Zustand mit einer Abtriebswelle (hier nicht näher dargestellt) der Getriebeeinheit 44 koppelbar ist. Es ist jedoch auch denkbar, dass das Drehmomentübertragungselement 34 in einem gekoppelten Zustand zum Antrieb des Schneidstrangs 18 direkt mit einem Ritzel der Antriebseinheit 42 und/oder einem Zahnrad der Getriebeeinheit 44 gekoppelt ist. Die Kopplungsausnehmung 72 ist konzentrisch im Drehmomentübertragungselement 34 angeordnet. Die Kopplungsausnehmung 72 ist als Innensechskant ausgebildet. Es ist jedoch auch denkbar, dass die Kopplungsausnehmung 72 eine andere, einem Fachmann als sinnvoll erscheinende Ausgestaltung aufweist.

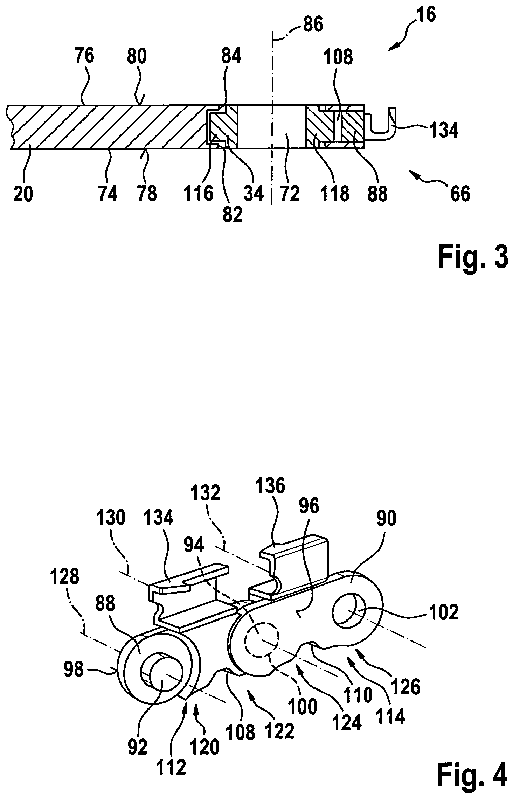

In einem ungekoppelten Zustand ist das Drehmomentübertragungselement 34 quer zur Schneidrichtung 46 des Schneidstrangs 18 und/oder entlang der Schneidrichtung 46 in der Führungseinheit 20 beweglich angeordnet (Figur 3). Hierbei ist das Drehmomentübertragungselement 34 zumindest teilweise zwischen zwei Außenwänden 74, 76 der Führungseinheit 20 angeordnet. Die Außenwände 74, 76 verlaufen zumindest im Wesentlichen parallel zur Schneidebene des Schneidstrangs 18. Die Führungseinheit 20 weist in Außenflächen 78, 80 der Außenwände 74, 76 jeweils eine Ausnehmung 82, 84 auf, in der das Drehmomentübertragungselement 34 zumindest teilweise angeordnet ist. Das Drehmomentübertragungselement 34 ist mit einem Teilbereich in den Ausnehmungen 82, 84 der Außenwände 74, 76 angeordnet. Das Drehmomentübertragungselement 34 weist hierbei zumindest in dem in den Ausnehmungen 82, 84 angeordneten Teilbereich eine Erstreckung entlang einer Rotationsachse 86 des Drehmomentübertragungselements 34 auf, die bündig mit einer der Außenflächen 78, 80 der Führungseinheit 20 abschließt. Ferner weist der in den Ausnehmungen 82, 84 der Außenflächen 78, 80 der Führungseinheit 20 angeordnete Teilbereich des Drehmomentübertragungselements 34 eine sich zumindest im Wesentlichen senkrecht zur Rotationsachse 86 des Drehmomentübertragungselements 34 erstreckende Außenabmessung auf, die zumindest 0,1 mm kleiner ist als eine sich zumindest im Wesentlichen senkrecht zur Rotationsachse 86 des Drehmomentübertragungselements 34 erstreckende Innenabmessung der Ausnehmungen 82, 84. Der in den Ausnehmungen 82, 84 angeordnete Teilbereich des Drehmomentübertragungselements 34 ist entlang einer senkrecht zur Rotationsachse 86 verlaufenden Richtung jeweils beabstandet zu einem die jeweilige Ausnehmung 82, 84 begrenzenden Rand der Außenwände 74, 76. Somit weist der in den Ausnehmungen 82, 84 angeordnete Teilbereich des Drehmomentübertragungselements 34 ein Spiel innerhalb der Ausnehmungen 82, 84 auf.

Figur 4 zeigt eine Detailansicht von Schneidenträgerelementen 88, 90 des Schneidstrangs 18 der Werkzeugmaschinentrennvorrichtung 16. Der Schneidstrang 18 umfasst eine Vielzahl miteinander verbundener Schneidenträgerelemente 88, 90, die jeweils mittels eines Verbindungselements 92, 94 des Schneidstrangs 18 miteinander verbunden sind, das zumindest im Wesentlichen bündig mit einer von zwei Außenflächen 96, 98 eines der miteinander verbundenen Schneidenträgerelemente 88, 90 abschließt (vgl. auch Figur 6). Die Verbindungselemente 92, 94 sind bolzenförmig ausgebildet. Die Außenflächen 96, 98 verlaufen in einem in der Führungsnut 70 angeordneten Zustand des Schneidstrangs 18 zumindest im Wesentlichen parallel zur Schneidebene des Schneidstrangs 18. Ein Fachmann wird je nach Anwendungsfall eine für den Schneidstrang 18 geeignete Anzahl an Schneidenträgerelementen 88, 90 auswählen. Die Schneidenträgerelemente 88, 90 sind jeweils einstückig mit einem der Verbindungselemente 92, 94 ausgebildet.

Ferner weisen die Schneidenträgerelemente 88, 90 jeweils eine Verbindungsausnehmung 100, 102 zur Aufnahme eines der Verbindungselemente 92, 94 der miteinander verbundenen Schneidenträgerelemente 88, 90 auf. Die Verbindungselemente 92, 94 sind mittels der Führungseinheit 20 geführt (Figur 6). Hierbei sind die Verbindungselemente 92, 94 in einem montierten Zustand des Schneidstrangs 18 in der Führungsnut 70 angeordnet. Die Verbindungselemente 92, 94 können sich, in einer senkrecht zur Schneidebene verlaufenden Ebene betrachtet, an zwei Seitenwänden 104, 106 der Führungsnut 70 abstützen. Die Seitenwände 104, 106 begrenzen die Führungsnut 70 entlang einer senkrecht zur Schneidebene verlaufenden Richtung. Ferner erstrecken sich die Seitenwände 104, 106 der Führungsnut 70, in der Schneidebene betrachtet, ausgehend von der Führungseinheit 20 senkrecht zur Schneidrichtung 46 des Schneidstrangs 18 nach außen.

Die Schneidenträgerelemente 88, 90 des Schneidstrangs 18 weisen jeweils eine Antriebsausnehmung 108, 110 auf, die jeweils in einem montierten Zustand auf einer dem Drehmomentübertragungselement 34 zugewandten Seite 112, 114 des jeweiligen Schneidenträgerelements 88, 90 angeordnet ist. Das Drehmomentübertragungselement 34 greift in zumindest einem Betriebszustand zum Antrieb des Schneidstrangs 18 in die Antriebsausnehmungen 108, 110 ein. Das Drehmomentübertragungselement 34 ist hierbei als Zahnrad ausgebildet. Somit umfasst das Drehmomentübertragungselement 34 Zähne 116, 118, die dazu vorgesehen sind, in zumindest einem Betriebszustand zum Antrieb des Schneidstrangs 18 in die Antriebsausnehmungen 108, 110 der Schneidenträgerelemente 88,90 einzugreifen. Ferner sind die dem Drehmomentübertragungselement 34 zugewandten Seiten 112, 114 der Schneidenträgerelemente 88, 90 kreisbogenförmig ausgebildet. Die dem Drehmomentübertragungselement 34 in einem montierten Zustand zugewandten Seiten 112, 114 der Schneidenträgerelemente 88, 90 sind jeweils in Teilbereichen 120, 122, 124, 126, zwischen einer Mittelachse 128 des jeweiligen Verbindungselements 92, 94 und einer Mittelachse 130, 132 der jeweiligen Verbindungsausnehmung 100, 102 betrachtet, kreisbogenförmig ausgestaltet. Die kreisbogenförmigen Teilbereiche 120, 122, 124, 126 sind jeweils angrenzend an die Antriebsausnehmungen 108, 110, in die das Drehmomentübertragungselement 34 eingreift, ausgebildet. Hierbei weisen die kreisbogenförmigen Teilbereiche 120, 122, 124, 126 einen Radius auf, der einem Radius eines Verlaufs der Führungsnut 70 an den konvexen Enden 64, 66 entspricht. Die Teilbereiche 120, 122, 124, 126 sind konkav ausgebildet (Figur 5).

Ferner weist der Schneidstrang 18 Schneidelemente 134, 136 auf. Die Schneidelemente 134, 136 sind jeweils einstückig mit einem der Schneidenträgerelemente 88, 90 ausgebildet. Eine Anzahl der Schneidelemente 134, 136 ist abhängig von einer Anzahl an Schneidenträgerelementen 88, 90. Ein Fachmann wird je nach Anzahl an Schneidenträgerelementen 88, 90 eine geeignete Anzahl an Schneidelementen 134, 136 auswählen. Die Schneidelemente 134, 136 sind dazu vorgesehen, ein Abtrennen und/oder ein Abtragen von Werkstoffteilchen eines zu bearbeitenden Werkstücks (hier nicht näher dargestellt) zu ermöglichen. Die Schneidelemente 134, 136 können beispielsweise als Vollmeißel, Halbmeißel oder andere, einem Fachmann als sinnvoll erscheinende Schneidenarten ausgebildet sein, die dazu vorgesehen sind, ein Abtrennen und/oder ein Abtragen von Werkstoffteilchen eines zu bearbeitenden Werkstücks zu ermöglichen. Der Schneidstrang 18 ist endlos ausgebildet. Somit ist der Schneidstrang 18 als Schneidkette ausgebildet. Die Schneidenträgerelemente 88, 90 sind hierbei als Kettenglieder ausgebildet, die mittels der bolzenförmigen Verbindungselemente 92,94 miteinander verbunden sind. Es ist jedoch auch denkbar, dass der Schneidstrang 18, die Schneidenträgerelemente 88, 90 und/oder die Verbindungselemente 92, 94 in einer anderen, einem Fachmann als sinnvoll erscheinenden Art und Weise ausgestaltet sind.

## Patentansprüche

1. Werkzeugmaschinensystem mit zumindest einer Werkzeugmaschinentrennvorrichtung, die zumindest einen Schneidstrang (18) und zumindest eine Führungseinheit (20) zur Führung des Schneidstrangs (18) aufweist, die zusammen ein geschlossenes System bilden, und mit zumindest einer tragbaren Werkzeugmaschine, die ein Werkzeugmaschinengehäuse (12) und zumindest eine Kopplungsvorrichtung (14) zur Kopplung der Werkzeugmaschinentrennvorrichtung, aufweist, wobei die tragbare Werkzeugmaschine zumindest eine Auflageeinheit (22) zur Auflage auf ein Werkstück umfasst, wobei die Auflageeinheit (22) und das Werkzeugmaschinengehäuse (12) relativ zueinander beweglich gelagert sind und wobei die Auflageeinheit (22) zumindest eine Arretiervorrichtung (30) umfasst, die dazu vorgesehen ist, das Werkzeugmaschinengehäuse (12) in einer Winkelstellung relativ zur Auflageeinheit (22) zu fixieren, **dadurch gekennzeichnet, dass** die Arretiervorrichtung (30) ein Klemmelement (56) aufweist, das dazu vorgesehen ist, in einem montierten Zustand der Werkzeugmaschinentrennvorrichtung (16) eine Klemmkraft zur Fixierung des Werkzeugmaschinengehäuses (12) in einer Winkelstellung relativ zur Auflageeinheit (22) auf die Führungseinheit (20) auszuüben.

2. Werkzeugmaschinensystem nach Anspruch 1,
**dadurch gekennzeichnet, dass** die Auflageeinheit (22) zumindest ein Lagerelement (24, 48) zur schwenkbaren Lagerung umfasst, das in einem montierten Zustand der Auflageeinheit (22) an einer der Kopplungsvorrichtung (14) abgewandten Seite (26) des Werkzeugmaschinengehäuses (12) mit dem Werkzeugmaschinengehäuse (12) wirkungsmäßig verbunden ist.

3. Werkzeugmaschinensystem nach einem der vorhergehenden Ansprüche, **dadurch gekennzeichnet, dass** die Auflageeinheit (22) zumindest ein Federelement (28) aufweist, das dazu vorgesehen ist, die Auflageeinheit (22) und das Werkzeugmaschinengehäuse (12) relativ zueinander vorzuspannen.

4. Werkzeugmaschinensystem nach einem der vorhergehenden Ansprüche, **dadurch gekennzeichnet, dass** die Arretiervorrichtung (30) auf einer dem Werkzeugmaschinengehäuse (12) zugewandten Seite (32) der Auflageeinheit (22) angeordnet ist.

5. Werkzeugmaschinensystem nach einem der vorhergehenden Ansprüche, **dadurch gekennzeichnet, dass** die Kopplungsvorrichtung (14) zumindest relativ zum Werkzeugmaschinengehäuse (12) schwenkbar gelagert ist.

6. Werkzeugmaschinensystem nach einem der vorhergehenden Ansprüche, **dadurch gekennzeichnet, dass** die Auflageeinheit (22) zumindest eine Werkzeugführungseinheit (36) aufweist, die dazu vorgesehen ist, eine Längsachse (38) der Werkzeugmaschinentrennvorrichtung in Abhängigkeit einer Winkelstellung des Werkzeugmaschinengehäuses (12) relativ zur Auflageeinheit (22) zumindest im Wesentlichen senkrecht zu einer Auflagefläche (40) der Auflageeinheit (22) auszurichten.

7. Werkzeugmaschinensystem nach Anspruch 6,
**dadurch gekennzeichnet, dass** die Werkzeugmaschinentrennvorrichtung (16) zumindest ein Drehmomentübertragungselement (34) aufweist, das zumindest teilweise in der Führungseinheit (20) gelagert ist.

## Claims

1. Machine-tool system having at least one machine-tool parting device which has at least one cutting strand (18) and at least one guide unit (20) for guiding the cutting strand (18), which cutting strand and guide unit together form a self-contained system, and having at least one portable machine tool which has a machine-tool housing (12) and at least one coupling device (14) for the coupling of the machine-tool parting device, wherein the portable machine tool comprises at least one support unit (22) for support on a workpiece, wherein the support unit (22) and the machine-tool housing (12) are mounted so as to be movable relative to one another, and wherein the support unit (22) comprises at least one arresting device (30) which is provided for fixing the machine-tool housing (12) in an angular position relative to the support unit (22), **characterized in that** the arresting device (30) has a clamping element (56) which is provided such that, when the machine-tool parting device (16) is in a mounted state, said clamping element exerts on the guide unit (20) a clamping force for fixing the machine-tool housing (12) in an angular position relative to the support unit (22).

2. Machine-tool system according to Claim 1, **characterized in that** the support unit (22) comprises at least one bearing element (24, 48) for pivotable mounting, which bearing element, when the support unit (22) is in a mounted state, is operatively connected to the machine-tool housing (12) on a side (26), which is remote from the coupling device (14), of the machine-tool housing (12) .

3. Machine-tool system according to one of the preceding claims,
**characterized in that** the support unit (22) has at least one spring element (28) which is provided for preloading the support unit (22) and the machine-tool housing (12) relative to one another.

4. Machine-tool system according to one of the preceding claims,
**characterized in that** the arresting device (30) is arranged on a side (32), which faces toward the machine-tool housing (12), of the support unit (22).

5. Machine-tool system according to one of the preceding claims,
**characterized in that** the coupling device (14) is pivotably mounted at least relative to the machine-tool housing (12).

6. Machine-tool system according to one of the preceding claims,
**characterized in that** the support unit (22) has at least one tool guide unit (36) which is provided for aligning a longitudinal axis (38) of the machine-tool parting device at least substantially perpendicular to a support surface (40) of the support unit (22) as a function of an angular position of the machine-tool housing (12) relative to the support unit (22).

7. Machine-tool parting device according to Claim 6,
**characterized in that** the machine-tool parting device (16) has at least one torque transmission element (34) which is mounted at least partially in the guide unit (20).

## Revendications

1. Système de machine-outil comprenant au moins un dispositif de coupe de machine-outil qui présente au moins un tronçon de coupe (18) et au moins une unité de guidage (20) pour le guidage de tronçon de coupe (18) qui forment ensemble un système fermé, et comprenant au moins une machine-outil portative qui présente un boîtier de machine-outil (12) et au moins un dispositif d'accouplement (14) pour l'accouplement du dispositif de coupe de machine-outil, la machine-outil portative comprenant au moins une unité d'appui (22) pour l'appui sur une pièce, l'unité d'appui (22) et le boîtier de machine-outil (12) étant supportés de manière déplaçable l'un par rapport à l'autre et l'unité d'appui (22) comprenant au moins un dispositif de blocage (30) qui est prévu pour fixer le boîtier de machine-outil (12) dans une position angulaire par rapport à l'unité d'appui (22), **caractérisé en ce que** le dispositif de blocage (30) présente un élément de serrage (56) qui est prévu, dans un état monté du dispositif de coupe de machine-outil (16), pour exercer une force de serrage pour la fixation du boîtier de machine-outil (12) dans une position angulaire par rapport à l'unité d'appui (22) sur l'unité de guidage (20).

2. Système de machine-outil selon la revendication 1, **caractérisé en ce que** l'unité d'appui (22) comprend au moins un élément de palier (24, 48) pour le support sur palier pivotant, qui, dans un état monté de l'unité d'appui (22) sur un côté (26) du boîtier de machine-outil (12) opposé au dispositif d'accouplement (14), est connecté fonctionnellement au boîtier de machine-outil (12) .

3. Système de machine-outil selon l'une quelconque des revendications précédentes, **caractérisé en ce que** l'unité d'appui (22) présente au moins un élément de ressort (28) qui est prévu pour précontraindre l'unité d'appui (22) et le boîtier de machine-outil (12) l'un par rapport à l'autre.

4. Système de machine-outil selon l'une quelconque des revendications précédentes, **caractérisé en ce que** le dispositif de blocage (30) est disposé sur un côté (32) de l'unité d'appui (22) tourné vers le boîtier de machine-outil (12).

5. Système de machine-outil selon l'une quelconque des revendications précédentes, **caractérisé en ce que** le dispositif d'accouplement (14) est supporté de manière pivotante au moins par rapport au boîtier de machine-outil (12).

6. Système de machine-outil selon l'une quelconque des revendications précédentes, **caractérisé en ce que** l'unité d'appui (22) présente au moins une unité de guidage d'outil (36) qui est prévue pour aligner un axe longitudinal (38) du dispositif de coupe de machine-outil en fonction d'une position angulaire du boîtier de machine-outil (12) par rapport à l'unité d'appui (22) au moins essentiellement perpendiculairement à une surface d'appui (40) de l'unité d'appui (22).

7. Système de machine-outil selon la revendication 6, **caractérisé en ce que** le dispositif de coupe de machine-outil (16) présente au moins un élément de transfert de couple (34) qui est supporté au moins en partie dans l'unité de guidage (20).
